# EUROPÄISCHE PATENTSCHRIFT

(11) **EP 4 060 829 B1**
(45) Veröffentlichungstag und Bekanntmachung des Hinweises auf die Patenterteilung: **01.01.2025**
(21) Anmeldenummer: 21162722.9
(22) Anmeldetag: 16.03.2021
(51) Int. Cl.: H01R 43/20, B25J 15/02, G01B 11/26

(54) **BESTÜCKUNGSANORDNUNG UND VERFAHREN ZUR BESTÜCKUNG VON STECKERGEHÄUSEN**
FEEDING ASSEMBLY AND METHOD FOR THE FEEDING OF CONNECTOR HOUSINGS
AGENCEMENT DE MONTAGE ET PROCÉDÉ DE MONTAGE DES BOÎTIERS DE CONNECTEUR

(43) Veröffentlichungstag der Anmeldung: 21.09.2022
(73) Patentinhaber: komax Holding AG, 6036 Dierikon (CH)
(72) Erfinder: Braun, Alfred, 6036 Dierikon (CH); Suter, Pascal, 6036 Dierikon (CH)
(74) Vertreter: Inventio AG

(56) Entgegenhaltungen:
- EP-A1- 3 301 768
- EP-A1- 3 301 769
- EP-A2- 2 783 814
- EP-B1- 3 301 769
- GB-A- 2 357 530

## Beschreibung

Die Erfindung betrifft eine Bestückungsanordnung zur Bestückung von Steckergehäusen mit konfektionierten Kabelenden von Kabeln. Weiterhin betrifft die Erfindung ein Verfahren zur Bestückung von Steckergehäusen mit konfektionierten Kabelenden von Kabeln. Die Bestückung erfolgt mittels einer Bestückungsgreifeinheit, deren Kabelgreifer das Kabel zum Steckergehäuse führt und der das Kabelende in eine Zellen des zu bestückenden Steckergehäuses einführt. Solche Bestückungsanordnungen sind häufig Konfektionieranlagen nachgeschaltet. Eine Konfektionieranlage kann dabei eine Abisolierstation zum Ablängen und Abisolieren der Kabel, eine oder mehrere Crimpstationen zum Aufbringen von Crimpkontakten an die abisolierten Kabelenden und gegebenenfalls Tüllenstationen umfassen. Die Bestückungsanordnung könnte aber auch Bestandteil einer Konfektionieranlage sein.

In der Kabelverarbeitung sind Bestückungsmaschinen bekannt und werden dazu genutzt Steckergehäuse mit den gewünschten Kabeln zur Fertigung von Teilkabelbäumen zu bestücken. Meist sind an den Kabelenden schon Kontaktteile (z.B. Crimpkontakte) angebracht, welche im Steckergehäuse einrasten und die elektrische Verbindung ermöglichen. Beim Bestücken, also dem Einbringen des konfektionierten Kabelendes in das Steckergehäuse, führt ein Kabelgreifer das Kabelende in die korrekte Steckposition. In vielen Fällen muss nach dem ersten, teilweisen Einführen des Kabelendes das Kabel an einer hinteren Position neu gegriffen werden, um die Kabelspitze vollständig einzuführen. Besonders dünnere Kabel müssen mit dem Zwischenschritt des Nachgreifens eingeführt werden, da sie - verglichen mit dickeren Kabeln - wesentlich biegeschlaffer sind. Im Zuge der fortschreitenden Gewichtsreduzierung der Kabelbäume, hat sich die Zahl der dünneren Kabeln gegenüber dickeren wesentlich vergrössert. Eine auf das Nachgreifen ausgelegte Bestückungsanordnung ist beispielsweise aus EP 2 317 613 A1 bekannt geworden. Diese Bestückungsanordnung umfasst einen Kabelgreifer, wobei die Greiferbacken einerseits pneumatisch und andererseits motorisch bewegt werden können. Der Pneumatikzylinder des pneumatischen Aktuators dient zum Schliessen der Greiferbacken, um die erforderliche Kraft für die Schliessbewegung aufzubringen. Die Kraft muss genug gross sein, um eine Auszugsprüfung im Anschluss an das Einsetzen durchführen zu können. Mit Hilfe der Auszugsprüfung kann festgestellt werden, ob das Kabelende richtig in das Stekergehäuse oder genauer in eine entsprechende Zelle des Stekergehäuses eingesetzt worden ist. Weiter besitzt der Kabelgreifer einen elektromechanischen Antrieb, um beim Nachgreifen die Greiferbacken nur soweit wie nötig zum Erstellen der erforderlichen Zwischenstellung zu öffnen. Dieser Hybridgreifer nutzt somit gewissermassen die Kraft der Pneumatik und die Genauigkeit der Elektromechanik. Diese Anordnung ist wegen des doppelten Systems der Aktuatoren aufwändig und teuer. Weiter braucht diese Anordnung vergleichsweise viel Platz.

Aus der EP 3 301 768 A1 ist für eine Bestückungsanordnung ein Ausrichtmodul zum rotationslagerichtigen Ausrichten von konfektionierten Kabelenden mit Dreheinrichtungen zum Drehen des Kabels um seine Kabellängsachse und mit optischen Detektionseinrichtungen bekannt geworden. Eine weitere eine Bestückungsanordnung ist in der EP 3 301 769 A1 offenbart.

Es ist deshalb eine Aufgabe der vorliegenden Erfindung, die Nachteile des Bekannten zu vermeiden und insbesondere eine verbesserte Bestückungsanordnung zur Bestückung von Steckergehäusen mit konfektionierten Kabelenden von Kabeln zu schaffen, welche ein Nachgreifen von Kabeln beim Einsetzen des Kabelendes in das Steckergehäuse ermöglicht.

Diese Aufgabe wird erfindungsgemäss mit einer Bestückungsanordnung mit den Merkmalen des Anspruchs 1 gelöst. Die Bestückungsanordnung zur Bestückung von Steckergehäusen mit konfektionierten Kabelenden von Kabeln umfasst einen Kabelgreifer mit zwei Greiferbacken zum Erfassen und Greifen des Kabels und einen mit Druckmitteln betreibbaren Aktuator zum Betätigen des Kabelgreifers.

Die Bestückungsanordnung umfasst weiter ein bevorzugt berührungslos arbeitendes, bevorzugt ausserhalb des Kabelgreifers in der Bestückungsanordnung angeordnetes Greiferortungssystem. Das Greiferortungssystem ist dazu eingerichtet, die Lage der Greiferbacken insbesondere während einer testweise durchgeführten Öffnungsbewegung in eine Zwischenstellung zu ermitteln. Dabei steht das Greiferortungssystem derart mit dem Kabelgreifer in Wirkverbindung, dass mittels des Greiferortungssystems der Kabelgreifer für die Zwischenstellung kalibrierbar ist. Der so kalibrierte Kabelgreifer stellt in der Produktionsphase, in der die Bestückung von Steckergehäusen mit den konfektionierten Kabelenden stattfindet, eine sichere und präzise Handhabung der Kabel durch den Kabelgreifer beim Nachgreifen sicher. Die Anordnung zeichnet sich durch einen einfachen Aufbau aus und erfordert keinen hohen steuerungstechnischen Aufwand.

Erfindungsgemäss umfasst die Bestückungsanordnung ein Ausrichtmodul zum rotationslagerichtigen Ausrichten des konfektionierten Kabelendes mit einer optischen Detektionseinrichtung zum Ermitteln der Rotationslage des konfektionierten Kabelendes.

Der Kabelgreifer und der mit Druckmitteln betreibbaren Aktuator ist derart ausgeführt, dass zum Einsetzen des konfektionierten Kabelendes in das Steckergehäuse das Kabel in einer Schliesstellung der Greiferbacken von den Greiferbacken klemmend festgehalten werden kann. Um ein Nachgreifen zu ermöglichen, sind die Greiferbacken durch eine Öffnungsbewegung von der Schliessstellung in eine Zwischenstellung überführbar. Wenn die Greiferbacken die der Zwischenstellung erreicht haben, kann der so geöffnete Kabelgreifer für das Nachgreifen entlang des Kabels zurückbewegt werden. Dadurch, dass die optische Detektionseinrichtung derart ausgeführt ist, dass mit dieser Detektionseinrichtung auch eine Öffnungsbewegung der Greiferbacken überwachbar ist, ist es möglich auf einfache und effiziente Weise Nachgreifen des Kabels beim Einsetzen des Kabelendes in das Steckergehäuse sicherzustellen. Die Bestückungsanordnung umfasst eine Steuereinheit zum Ansteuern des Aktuators, wobei die Steuereinheit derart mit dem Ausrichtmodul verbunden ist, dass anhand von der optischen Detektionseinrichtung ermittelten Daten der Öffnungsbewegung der Greiferbacken der mit Druckmitteln betreibbare Aktuator des Kabelgreifers für die Zwischenstellung kalibriert werden kann. Die Bestückungsanordnung zeichnet sich durch einen wenig komplizierten Aufbau und insgesamt wenige Bauteile aus. Entsprechend ist auch eine kompakte Bauform erhältlich. Insbesondere eine den Kabelgreifer enthaltende Bestückungsgreifeinheit kann vergleichsweise schlank gebaut werden. Das eingangs erwähnte Greiferortungssystem muss nicht notwendigerweise durch die hier beschriebene Detektionseinrichtung des Ausrichtmoduls gebildet werden. Für bestimmte Anwendungen, beispielsweise zur Handhabung von Kontaktelementen mit einer im Querschnitt runden Aussenkontur, welche für die Bestückung nicht ausgerichtet werden müssen, kann ein Greiferortungssystem mit einer optischen Detektionseinrichtung zum Ermitteln der Lage der Greiferbacken des Kabelgreifers eingesetzt werden. Diese Detektionseinrichtung kann gleichartig oder zumindest ähnlich wie die nachfolgend im Detail beschriebene Detektionseinrichtung des Ausrichtmoduls ausgeführt sein; nur wird mit dieser Detektionseinrichtung die Rotationslage des konfektionierten Kabelendes nicht oder nicht mehr ermittelt.

Der Kabelgreifer weist bevorzugt zwei gegenläufig bewegbare Greiferbacken zum Erfassen und Greifen des Kabels auf. In der Schliesstellung der Greiferbacken kann das Kabel klemmend festgehalten werden. Dabei findet das Festhalten in einem Bereich des Kabelendes statt, der in der Regel unmittelbar oder nahe an den dem Kontaktelement zugeordneten Bereich des Kabels anschliesst. Der mit Druckmitteln betreibbare Kabelgreifer kann vorzugsweise ein pneumatischer Aktuator zum Betätigen bzw. Aktivieren des Kabelgreifers für die Bewegung der Greiferbacken sein. Durch die Betätigung mittels der Druckmittel können die Greiferbacken aufeinander zu oder zum Öffnen des Kabelgreifers voneinander weg bewegt werden. Das Aufeinander zu bewegen wird nachfolgend als Schliessbewegung bezeichnet; die Schliessstellung entspricht einer Endstellung, in der die Greiferbacken das Kabel klemmend festhalten. Wenn die Greiferbacken voneinander wegbewegt werden, findet die Öffnungsbewegung statt; die Offenstellung entspricht einer Stellung, in der die Greiferbacken soweit vom Kabel beabstandet sich, dass der Kabelgreifer vom Kabel entfernt werden kann und ein neues Kabel erfasst werden kann. Druckmittel sind Mittel, die mittels eines Fluids (z.B. ein Gas oder eine Flüssigkeit) Druck ausüben auf ein Stellelement (z.B. ein Kolben eines Pneumatikzylinders) des mit Druckmitteln betreibbaren Aktuators. Vorzugsweise kommen pneumatische Mittel, also insbesondere Druckluft, als Druckmittel zum Einsatz. Auch Hydraulikmittel sind vorstellbar.

Bei der Bestückung von Steckergehäusen gibt es auch Kontaktteile, die nur in einer bestimmten Ausrichtung in das Steckergehäuse eingeführt werden können. Der Zweck des Ausrichtmoduls ist, das konfektionierte Kabelende, das mit einem derartigen Kontaktteil bestückt ist, auszurichten. Zum Beispiel kann ein solches spezielles Kontaktteil eine im Querschnitt rechteckige Aussenkontur aufweisen. Hierzu kann das Ausrichtmodul zum rotationslagerichtigen Ausrichten des konfektionierten Kabelendes eine Dreheinrichtung zum Drehen des Kabels um seine Kabellängsachse umfassen. Mit der bereits erwähnten optischen Detektionseinrichtung kann die Rotationslage des konfektionierten Kabelendes nach der mittels der Dreheinrichtung vorgenommenen Ausrichtung des Kabelendes geprüft werden. Die Detektionseinrichtung kann optische Mittel wie etwa eine Kamera oder beispielsweise andere optische Projektionssensoren sowie eine Bildauswerteeinrichtung und gegebenenfalls eine Beleuchtungseinrichtung aufweisen. Ausrichtmodule zum rotationslagerichtigen Ausrichten von konfektionierten Kabelenden mit Dreheinrichtungen zum Drehen des Kabels um seine Kabellängsachse und mit optischen Detektionseinrichtungen sind beispielsweise in der EP 1 304 773 A1 oder der EP 3 301 768 A1 gezeigt. Das Ausrichtmodul kann aber auch für konfektionierte Kabelenden mit Kontaktelementen mit mehr oder weniger rotationssymmetrischen Aussenkonturen oder sogar für bloss abisolierte Kabelenden für die hier beschriebene Kalibrierung im Hinblick auf den Nachgreifvorgang verwendet werden. Bei derartigen Kabelenden muss die Dreheinrichtung des Ausrichtmoduls nicht eingesetzt werden. Die Dreheinrichtung des Ausrichtmoduls könnte für einen solchen Fall auch aus dem Ausrichtmodul entfernt werden.

Die Detektionseinrichtung ist derart ausgeführt, dass mit der Detektionseinrichtung die Öffnungsbewegung zum Erstellen einer Zwischenstellung für das Nachgreifen bei einer Bestückung des Steckergehäuses der Greiferbacken überwacht werden kann. Mit dieser Überwachung können die Bewegungs- und/oder Lagedaten der geöffneten Greiferbacken in einer Stellung ermitteltwerden, die in der Produktionsphase der Zwischenstellung entspricht. Unter Zwischenstellung wird vorliegend die Stellung der Greiferbacken verstanden, in der die Greiferbacken das Kabel nicht mehr klemmend, sondern lose festhalten. In der Zwischenstellung ist das Kabel zumindest teilweise radial vom Greiferbacken umschlossen, so dass eine Führungsfunktion aufrechterhalten werden kann. Die so geöffneten Greiferbacken bzw. die Greiferbacken in der Zwischenstellung können für das Nachgreifen entlang der Kabellängsachse zurückbewegt (d.h. in Gegenrichtung zur Einsteck- bzw. Einführrichtung zum Einführen des Kabelendes in eines Zelle des Steckergehäuses) werden. Das jeweilige Nachgreifen ist Voraussetzung dafür, dass das Kabel zum vollständigen Einsetzen des Kabelendes in das Steckergehäuse stufenweise vorgeschoben werden kann, was insbesondere bei dünnen Kabeln notwendig sein kann.

Die Bestückungsanordnung weist zum Steuern der Bewegung der Greiferbacken wie vorgängig erwähnt eine Steuereinheit zum Ansteuern des Aktuators zum Bewegen der Greiferbacken auf. Die Steuereinheit ist derart ausgeführt und mit dem Ausrichtmodul elektronisch verbunden, dass anhand von der Detektionseinrichtung ermittelten Daten der vorgängig durchgeführten Öffnungsbewegung der Greiferbacken von der Schliesstellung in die Zwischenstellung der Aktuator im Hinblick auf den Nachgreifvorgang beim Einführen des konfektionierten Kabelendes in das Steckergehäuse kalibriert werden kann. Dank der Kalibrierung lässt sich die benötigte Präzision und Wiederholgenauigkeit für das Nachgreifen beim Bestücken von Steckergehäusen mit konfektionierten Kabelenden mit Druckmitteln betriebenen Aktuatoren von Kabelgreifern erreichen. Es kann ein Aktuator mit einem vergleichsweise einfachen Aufbau eingesetzt werden. Es sind keine Vielzahl von zusätzlichen Sensoren erforderlich.

Die Bestückungsanordnung kann weiter eine Transfereinrichtung umfassen, mit welcher das Kabel mit dem Kabelende zwischen Bearbeitungsstationen transferiert werden kann. Selbstverständlich kann das Kabel auch ein Kabelstück sein, dessen beide Kabelenden mit Crimpkontakten bestückt ist. Das bereits erwähnte Ausrichtmodul kann eine solche Bearbeitungsstation sein. Eine weitere Bearbeitungsstation kann ein Bestückungsmodul sein, in der das Einführen des Kabelendes in das Steckergehäuse schliesslich stattfindet. Das Kabelende kann mit Hilfe der Transfereinrichtung gegebenenfalls zu weiteren Bearbeitungsstationen wie etwa Tüllenstationen gebracht werden. Der Kabeltransfer kann zum Beispiel durch Verschieben, Verschwenken und/oder durch eine Längsbewegung des Kabels erfolgen

Die Bestückungsanordnung kann einen bewegbaren Träger für den Kabelgreifer aufweisen, mit welchem Träger der Kabelgreifer beispielsweise vom Ausrichtmodul zum die Steckergehäuse haltenden Gehäuseaufnahmeeinrichtung des Bestückungsmodul bewegt werden kann. Der Pneumatikzylinder des Aktuator kann dabei bevorzugt auf dem Träger montiert sein. Der Aktuator kann einen vorzugsweise als doppeltwirkend ausgestalteten Pneumatikzylinder umfassen, wobei der Aktuator mit dem Pneumatikzylinder auf dem Träger montiert ist. Diese Anordnung hat den Vorteil, dass eine besonders kompakte Bauform für die Bestückungsgreifeinheit erhältlich ist.

Es kann eine Druckmittelquelle, zum Beispiel eine Druckluftquelle oder Druckluftspeiseleitung zur Bereitstellung von beispielsweise Druckluft vorgesehen sein. Weiter kann die Bestückungsanordnung eine Ventilanordnung zur Erzeugung von Druckluftpulsen aus der Druckluft aufweisen. Die Steuereinheit kann zur Steuerung der Ventilanordnung zur Erzeugung von Druckluftpulsen beispielsweise einer vorgegebenen Dauer verwendet werden.

In einer bevorzugten Ausführungsform weist der Aktuator eine Ventilanordnung mit wenigstens einem als Schnellschaltventil (z.B. ein magnetisch betätigbares Ventil) ausgeführten Steuerventil auf, mit dem wenigstens für die Öffnungsbewegung zum Erstellen der Zwischenstellung der Aktuator oder präziser dessen Stellelement (z.B. ein Kolben eines Pneumatikzylinders) mit wenigstens einem und gegebenenfalls mehreren von der Steuereinheit vorgegebenen Druckluftpulsen beaufschlagbar ist. Ein Schnellschaltventil kann ein magnetisch betätigbares Ventil sein. Ein solches Schnellschaltventil kann von einem Elektromagneten betätigt werden und lässt sich sehr schnell schalten. Die mehreren Druckluftpulse können eine Abfolge von Druckluftpulsen bilden, wobei die Anzahl und/oder die Länge (bzw. Dauer) der Druckluftpulse in den Abfolgen variiert werden kann, wodurch eine effiziente Kalibrierung des Kabelgreifers im Hinblick auf das Nachgreifen sichergestellt werden kann. Um die Länge und/oder Anzahl der Druckluftpulse für die gewünschte Öffnung des Kabelgreifers für eine optimale Zwischenstellung zu bestimmen, werden die Druckluftpulse unter Verwendung der optischen Detektionseinrichtung des Ausrichtmoduls kalibriert.

Gemäss einer weiteren Ausführungsform kann der Aktuator einen vorzugsweise als doppeltwirkend ausgestalteten Pneumatikzylinder umfassen, wobei der Aktuator oder genauer die Ventilanordnung des Aktuators wenigstens ein als Schnellschaltventil (z.B. ein magnetisch betätigbares Ventil) ausgestaltetes Steuerventil je Druckkammer des Pneumatikzylinders aufweist. Wenigstens einem der Steuerventile und bevorzugt dem sich bei der Öffnungsbewegung verkleinernden Druckkammer zugeordneten Steuerventil kann ein Blendenventil vor- oder nachgeschaltet sein. Das Blendenventil verlangsamt den Druckabbau in der Druckkammer, was die Reaktion des Pneumatikzylinders träge macht und die Ansteuerung vereinfacht. Zudem wird das Pneumatiksystem durch den höheren Kammerdruck unempfindlicher gegenüber äusseren Kräften. Das Blendenventil zeichnet sich im Wesentlichen durch eine kurze Verengung der Druckluftleitung aus. Der Durchfluss und der Druckabfall sind bei einem Blendenventil weitgehend unabhängig von der Viskosität des Druckmittels.

Die Steuereinheit kann derart ausgeführt sein, dass für einen Druckluftpuls beide Schnellschaltventile des Pneumatikzylinders gemeinsam für eine kurze Zeitdauer geschaltet werden. Dabei strömt Druckluft oder ein anderes Druckmittel in eine erste Kammer des Pneumatikzylinders. Aus der zweiten Kammer (die oben schon erwähnte sich bei der Öffnungsbewegung verkleinernde Druckkammer) entweicht die Druckluft gebremst durch das Blendenventil. Sobald die Schnellschaltventile geschlossen sind, sind die Greiferbacken in ihrer Position stabil, da alle Druckkammern unter Druck stehen.

Anstelle des Blendenventils könnte ein Drossel-Rückschlagventil oder ein Blende-Rückschlagventil eingesetzt werden. Diese Ventile würden ein schnelleres Schliessen des Kabelgreifers erlauben. Die Wiederholgenauigkeit beim Teilöffnen wäre mit diesem Aufbau jedoch etwas reduziert. Das Schliessen des Rückschlagventils benötigt eine schwierig zu bestimmende Menge an Luft.

Der Aktuator oder genauer die Ventilanordnung des Aktuators kann zwei als Schnellschaltventile ausgestaltete Steuerventile je Druckkammer aufweisen, wobei bevorzugt wenigstens einem der Steuerventile und bevorzugt einem der sich bei der Öffnungsbewegung verkleinernden Druckkammer zugeordneten Steuerventile ein Blendenventil vor- oder nachgeschaltet ist.

Die Bestückungsanordnung kann derart ausgestaltet sein, dass zum gemeinsamen Bewegen der Greiferbacken mittels eines einzigen Pneumatikzylinders beide Greiferbacken getriebemässig miteinander und mit dem Kolben des Pneumatikzylinders verbunden sind, sodass die beiden Greiferbacken simultan bewegbar sind. Es ist aber auch denkbar, dass jedem Greiferbacken je ein Pneumatikzylinder zugeordnet ist. Die simultane Bewegung der beiden Greiferbacken kann durch entsprechende Ansteuerung gewährleistet werden.

Die Detektionseinrichtung des Ausrichtmoduls kann sowohl zum Ermitteln der Rotationslage des konfektionierten Kabelendes als auch zum Ermitteln der Bewegungs- und/oder Lagedaten der geöffneten Greiferbacken in der Zwischenstellung eine Kamera und vorzugsweise eine Digitalkamera oder ein Bilderfassungsmodul mit wenigstens zwei in unterschiedlichen Richtungen angeordneten Zeilensensoren aufweisen. Die Zeilensensoren können zum Beispiel CCD- oder CMOS- Zeilensensoren sein. Zusätzlich zur Kamera oder zum Bilderfassungsmodulkann die Detektionseinrichtung eine Bildauswerteeinrichtung zur Auswertung der von der Kamera oder vom Bilderfassungsmodul generierten Bilddaten und vorzugsweise eine Beleuchtungseinrichtung umfassen. Die zwei unterschiedlichen Richtungen, in denen die Zeilensensoren angeordnet sind oder entlang welchen sich die Zeilensensoren erstrecken, können vorzugsweise rechtwinklig zueinander verlaufen. Zum Beispiel kann einer der Zeilensensoren ein in horizontaler Richtung verlaufender Zeilensensor und der andere Zeilensensor ein in vertikaler Richtung verlaufender Zeilensensor sein. Auch das eingangs erwähnte Greiferortungssystem kann eine Digitalkamera oder ein Bilderfassungsmodul mit wenigstens zwei in unterschiedlichen Richtungen angeordneten Zeilensensoren aufweisen.

Die Kamera kann in einer stirnseitigen Lage in Bezug auf eine von der Bestückungsgreifeinheit, wenn der Kabelgreifer sich im Wirkbereich des Ausrichtmoduls befindet, vorgegebenen Längsachse positioniert sein. Die durch den Kabelgreifer vorgegebene Längsachse wird nachfolgend daher auch als «Greiferlängsachse» bezeichnet. Diese Längsachse verläuft vorzugsweise koaxial zur Kabellängsache des Kabels, wenn das Kabel vom Kabelgreifer aufgenommen ist. Weiter liegt vorzugsweise die optische Achse der Kamera in etwa auf der Greiferlängsachse bzw. auf der Kabellängsachse des konfektionierten, vom Kabelgreifer gehaltenen Kabelendes, wenn der Kabelgreifer sich im Wirkbereich des Ausrichtmoduls befindet. In Bezug auf den Einrichtvorgang zum Einrichten des Kabelgreifers im Hinblick auf das Nachgreifen schaut die Kamera gewissermassen in axialer Richtung auf das stirnseitige Ende des Kabelgreifers. Beim Ausrichtvorgang schaut die Kamera also gewissermassen in axialer Richtung auf das stirnseitige Ende des Kabels. Im Fall des Bilderfassungsmoduls ist es vorteilhaft, wenn die wenigstens zwei Zeilensensoren des Bilderfassungsmoduls auf einer bevorzugt senkrecht zur Längsachse verlaufenden Ebene liegen.

Wenn die vorerwähnte Kamera für die Detektionseinrichtung verwendet wird, kann es vorteilhaft sein, wenn an den Stirnseiten der Greiferbacken Markierungen angebracht sind, mit deren Hilfe die Bildauswertung vereinfacht werden kann.

Das Detektierergebnis zum Prüfen der jeweiligen Zwischenstellung kann optimiert werden, wenn die Greiferbacken jeweils Backennasen aufweisen. Unter Backennase wird ein nasenartiger, an einem Backengrundkörper angeformter Fortsatz verstanden. Der Kabelgreifer weist dabei zwei einander gegenüberliegende vorzugsweise halbschalenförmige Backennasen auf. Diese Backennasen bilden vom jeweils zugehörigen Backengrundkörper in axialer Richtung weg ragende Verlängerungen, zwischen welchen Verlängerungen das Kabel - wie bei den Backengrundkörpern - klemmend festgehalten werden kann. Zum Ermitteln der Bewegungs- und/oder Lagedaten der bis zur Zwischenstellung geöffneten Greiferbacken kann der Kabelgreifer über die Backennasen in das Bilderfassungsmoduleingebracht werden. Wenn die Backennasen in das Bilderfassungsmoduleingebracht sind, also wenn die Fortsätze in das Bilderfassungsmodulbzw. dessen Aufnahmebereich eindringen, liegen die Backennasen oder wenigstens die vorderen Enden bzw. Spitzen der Backennasen neben bzw. zwischen den Zeilensensoren, sodass der jeweilige Zeilensensor Bilddaten der vorderen Enden der Backennasen und damit der Greiferbacken aufnehmen kann.

Ein weiterer Aspekt der Erfindung betrifft ein Verfahren zur Bestückung von Steckergehäusen mit konfektionierten Kabelenden von Kabeln, wobei für das Verfahren die vorgängig beschriebene Bestückungsanordnung verwendet wird. Das Verfahren zur Bestückung von Steckergehäusen mit konfektionierten Kabelenden von Kabeln kann für bzw. während der Produktionsphase folgende Schritte umfassen: das Kabelende des Kabels wird mittels eines pneumatisch antreibbaren Kabelgreifers, der das Kabel zwischen zwei Greiferbacken des Kabelgreifers in einer Schliessstellung klemmend hält, zu einem eine optische Detektionseinrichtung umfassendes Ausrichtmodul geführt. In bzw. mit dem Ausrichtmodul wird die rotationslagerichtige Ausrichtung des Kabelendes überprüft und gegebenenfalls, falls erforderlich, mittels einer Dreheinrichtung zum Drehen des Kabels um seine Kabellängsachse ausgerichtet. Zum Erstellen der Schliessstellung kann ein Aktuator des Kabelgreifers derart mit Druckluft beaufschlagt werden, dass das Kabel zwischen zwei Greiferbacken des Kabelgreifers in der Schliessstellung klemmend gehalten wird. Danach wird das so geprüfte und gegebenenfalls ausgerichtete Kabelende durch den Kabelgreifer in ein Steckergehäuse eingesetzt, wobei nach einem erstmaligen Vorschieben des Kabels, bei oder nach dem das Kabelende noch nicht vollständig in das Steckergehäuse eingesetzt ist, ein oder mehrere Nachgreifen zum stufenweisen weiteren Vorschieben des Kabels erfolgen, wobei zum Nachgreifen die Greiferbacken bis zu einer Zwischenstellung geöffnet werden.

Das erfindungsgemässe Verfahren zeichnet sich dadurch aus, dass
wenigstens vor der Produktionsphase zum Einrichten des pneumatisch antreibbaren Kabelgreifers im Hinblick auf das Nachgreifen in der Produktionsphase folgenden Schritte durchgeführt werden: Zuführen des Kabelgreifers (vorzugsweise ohne Kabel) zum Ausrichtmodul mit der optischen Detektionseinrichtung, mit der die rotationslagerichtige Ausrichtung des Kabelendes überprüfbar ist oder zu einem Greiferortungssystem, und Kalibrieren des Kabelgreifers, indem die Greiferbacken des Kabelgreifers testweise mittels wenigstens eines Druckluftpulses von der Schliessstellung in Öffnungsrichtung zum Erstellen der Zwischenstellung bewegt werden, wobei die Bewegungs- und/oder Lagedaten der so geöffneten Greiferbacken mit der optischen Detektionseinrichtung des Ausrichtmoduls oder dem Greiferortungssystem erfasst werden. Das Kalibrieren hat den Zweck, dass im Hinblick auf das Nachgreifen beim Einsetzen des konfektionierten Kabelendes in ein Steckergehäuse optimale Parameter für die Beaufschlagung des Aktuators mit Druckluft ermittelt werden können. Mittels des wenigstens einen Druckluftpulses werden die Greiferbacken von der Schliessstellung in eine geöffnete Stellung, die der Zwischenstellung für die spätere Produktionsphase entspricht, bewegt. Die Bewegungs- und/oder Lagedaten der so geöffneten Greiferbacken werden mit der optischen Detektionseinrichtung des Ausrichtmoduls ermittelt und für die Kalibrierung des Kabelgreifers verwendet. Alternativ können die Bewegungs- und/oder Lagedaten der so geöffneten Greiferbacken auch mit dem oben erwähnten Greiferortungssystem ermittelt und für die Kalibrierung des Kabelgreifers verwendet werden. Dabei können die so ermittelten Daten mit dem gewünschten Zustand für die Zwischenstellung verglichen werden, und, sofern nicht der gewünschte Zustand erreicht worden ist, werden die Parameter des wenigstens einen Druckluftpuls angepasst und der Vorgang wiederholt. Dank der Nutzung des Ausrichtmoduls für die Kalibration des pneumatisch antreibbaren Kabelgreifers im Hinblick auf das Nachgreifen in der Produktionsphase kann die Anordnung zur Bestückung von Steckergehäusen mit konfektionierten Kabelenden einfach und effizient eingerichtet und betrieben werden.

In der Produktionsphase kann demnach das Einsetzen des Kabelendes durch den Kabelgreifer in das Steckergehäuse wie folgt ablaufen: nach einem erstmaligen Vorschieben des Kabels, bei oder nach dem das Kabelende noch nicht vollständig in das Steckergehäuse eingesetzt ist, werden ein oder mehrere Nachgreifvorgänge zum stufenweisen weiteren Vorschieben des Kabels vorgenommen, wobei für das Nachgreifen eine Zwischenstellung der Greiferbacken mit wenigstens einem aus der Kalibrierung erhaltenen Druckluftimpuls eingestellt wird, welche Zwischenstellung auf bei der Kalibrierung ermittelten Stellgrösse für den wenigstens einen Druckluftpuls basiert.

Bei der Kalibrierung können die Greiferbacken jeweils mit einem Druckluftpuls in die Zwischenstellung bewegt werden, wobei zum Erstellen von einzelnen Zwischenstellungen die Länge des jeweiligen Druckluftpulses variiert wird.

Die Greiferbacken können bei der Kalibrierung aber auch mittels einer Abfolge von Druckluftpulsen in Zwischenstellungen bewegt werden. Die Stellgrösse kann somit auch eine Abfolge von Druckluftstössen vorgeben.

Bei der Kalibrierung können die Greiferbacken besonders bevorzugt mit mehreren Abfolgen von Druckluftpulsen in Zwischenstellungen (je Abfolge eine Zwischenstellung) bewegt werden, wobei die Länge (bzw. Dauer) und/oder die Anzahl der Druckluftpulse in den Abfolgen variiert werden.

Wenn die optische Detektionseinrichtung eine Kamera ist oder umfasst, kann es für die Kalibration des Kabelgreifers vorteilhaft sein, wenn die Greiferbacken in einen Fokusbereich der Kamera gebracht werden. Alternativ kann es vorteilhaft sein, wenn die Kamera- oder Objektiveinstellung der Kamera derart angepasst wird, dass für die Kalibrierung die Kamera auf Greiferbacken fokussiert. Bei der Ausrichtung kann die Fokussierung auf die Crimpkontakte oder andere Kontaktelemente des konfektionierten Kabelenden gerichtet sein.

Wenn die optische Detektionseinrichtung ein Bilderfassungsmodul mit wenigstens zwei in unterschiedlichen Richtungen angeordneten Zeilensensoren ist oder umfasst, ist es vorteilhaft, wenn der Kabelgreifer während des Kalibrierungsvorgangs wenigstens teilweise, beispielsweise über dessen Backennasen, in das Bilderfassungsmodul eingebracht wird, so dass der wenigstens eine Teil (zum Beispiel wenigstens die vordere Enden bzw. Spitzen der Backennasen) des Kabelgreifers in den Beobachtungsbereich der Zeilensensoren aufgenommen ist.

Vorteilhaft ist es, wenn die Kalibrierung an einem Produktionsanfang vorgenommen wird. Zum Sicherstellen einer zuverlässigen Bestückung über einen langen Zeitraum kann es vorteilhaft sein, wenn nach der erstmaligen Kalibrierung am Produktionsanfang die Kalibrierung in vordefinierten Abständen wiederholt wird.

Weitere Einzelmerkmale und Vorteile der Erfindung ergeben sich aus der nachfolgenden Beschreibung von Ausführungsbeispielen und aus den Zeichnungen. Es zeigen:
- Figur 1:: eine perspektivische Darstellung einer Anlage zur Konfektionierung von Kabeln umfassend eine Bestückungsanordnung zur Bestückung von Steckergehäusen mit konfektionierten Kabelenden mit einem Kabelgreifer und einem Ausrichtmodul zum rotationslagerichtigen Ausrichten des konfektionierten Kabelendes,
- Figur 2: eine Bestückungsanordnung zur Bestückung von Steckergehäusen mit konfektionierten Kabelenden mit einem pneumatisch antreibbaren Kabelgreifer einer Bestückungsgreifeinheit während eines Ausrichtvorgangs mittels einer eine Kamera aufweisenden optischen Detektionseinrichtung des Ausrichtmoduls,
- Figur 3: die Bestückungsanordnung aus Figur 2 während eines Kalibrationsvorgangs zur Kalibrierung des Kabelgreifers für die Zwischenstellung,
- Figur 4a:: eine Seitenansicht der Anordnung aus Figur 3,
- Figur 4b:: eine Draufsicht der Anordnung aus Figur 3,
- Figur 5:: eine Rückansicht der Anordnung aus Figur 3 (Blickrichtung entlang der Greifer- bzw. Kabellängsachse),
- Figur 6:: eine Variante des Kabelgreifers für die Bestückungsanordnung in einer stirnseitigen Vorderansicht,
- Figur 7:: ein als Doppelgreifer ausgestalteter Kabelgreifer für die Bestückungsanordnung,
- Figur 8a:: eine perspektivische Darstellung einer Bestückungsanordnung zur Bestückung von Steckergehäusen mit konfektionierten Kabelenden mit einem Kabelgreifer einer Bestückungsgreifeinheit und einem Ausrichtmodul mit einer mit ein CCD-Modul aufweisenden optischen Detektionseinrichtung, wobei der Kabelgreifer sich ausserhalb des Wirkbereichs des CCD-Moduls befindet,
- Figur 8b:: die Bestückungsanordnung aus Figur 6b mit einem für die Kalibration in den Wirkbereich des CCD-Moduls vorgeschobenen Kabelgreifer,
- Figur 9a:: eine Seitenansicht der Anordnung gemäss Figur 8a,
- Figur 9b:: eine Seitenansicht der Anordnung gemäss Figur 8b,
- Figur 10:: ein Pneumatikschema für einen Aktuator zum Bewegen des Kabelgreifers der Bestückungsanordnung,
- Figur 11:: ein Pneumatikschema für einen alternativen Aktuator zum Bewegen des Kabelgreifers der Bestückungsanordnung, und
- Figur 12:: ein Pneumatikschema eines weiteren Ausführungsbeispiel eines Aktuators zum Bewegen des Kabelgreifers der Bestückungsanordnung.

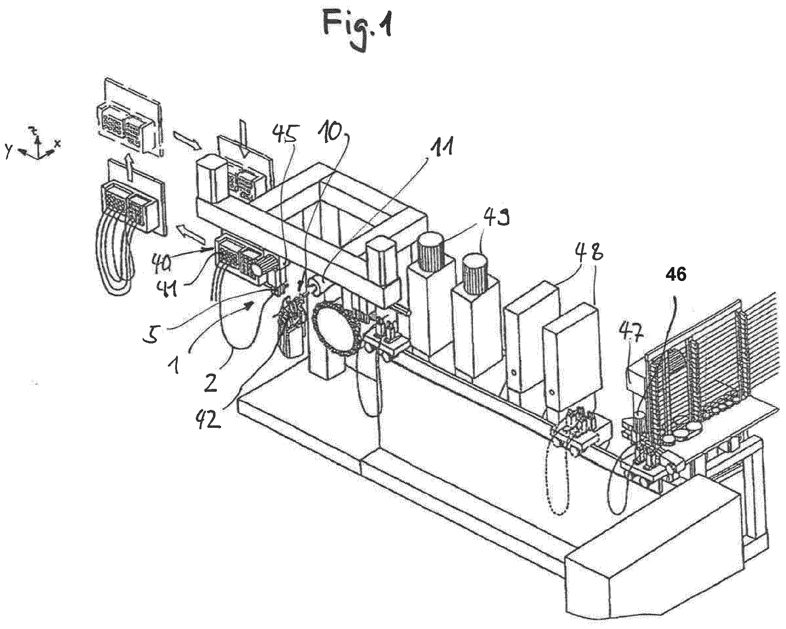

Figur 1 zeigt eine Anlage zur Konfektionierung von Kabeln 2. Die Anlage umfasst eine Bestückungsanordnung 1 mit einem Kabelgreifer 5 einer Bestückungsgreifeinheit und einem Ausrichtmodul 10 zum rotationslagerichtigen Ausrichten des konfektionierten Kabelendes. Die beispielhaft gezeigte Konfektionierungsanlage umfasst weiter einen Schlaufenleger 46 zum Erstellen von Kabelschlaufen. Sodann umfasst die Konfektionierungsanlage Abisolierstationen 47, Tüllenstationen 48 und Crimpstationen 49. Bis auf die spezielle Bestückungsanordnung 1 entspricht die Konfektionierungsanlage im Wesentlichen der in der EP 1 304 773 A1 gezeigten Anlage. Der Kabelgreifer 5 ist auf einem in y-Richtung verschiebbaren Träger 45 angeordnet. Der Kabelgreifer 5 kann zwischen dem Ausrichtmodul 10 und dem mit 40 bezeichneten Bestückungsmodul mit den Steckergehäusen 41 bewegt werden (Bewegungsrichtungen x,y,z). Die Einsteck- bzw. Einführrichtung zum Einführen des konfektionierten Kabelendes in eine Zelle eines Steckergehäuses erfolgt in x-Richtung. Zum Nachgreifen, welcher Vorgang nachfolgend detailliert erläutert wird, wird der Kabelgreifer 5 um ein kurzes Stück entlang des Kabels zurück, also in Gegenrichtung zur Einsteckrichtung (Bewegungsrichtung -x-Richtung), bewegt.

Die nachfolgend im Detail beschriebene Bestückungsanordnung 1 könnte auch in anderen Konfektionierungsanlage verwendet werden. Weiter kann die Bestückungsanordnung 1 auch als eigenständige Anlage vorgesehen werden. Die Integration der Bestückungsanordnung 1 in einer Konfektionierungsanlage in der Art von Figur 1 ist nicht erforderlich. Selbstverständlich kann die Bestückungsanordnung 1 anstelle von Kabelschlaufen auch andere Kabelformen wie etwa einzelne gerade Kabelstücke oder von einem Kabelvorrat stammende Kabel handhaben.

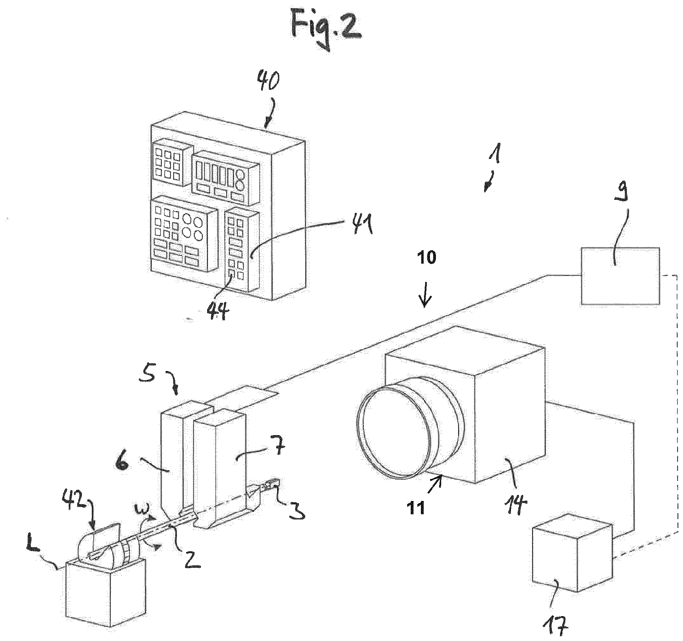

Figur 2 zeigt die insgesamt mit 1 bezeichnete Bestückungsanordnung zur Bestückung von Steckergehäusen 31 mit konfektionierten Kabelenden 3 von Kabeln 2. Das Kabel 2 weist in Figur 2 beispielhaft ein mit einem Crimpkontakt versehenes Kabelende 3 des Kabels 2 auf. Mit L ist eine Längsachse bezeichnet, die durch den Kabelgreifer 5 vorgegeben ist und die, wenn das Kabel 2 vom Kabelgreifer 5 beaufschlagt ist, der Kabellängsachse des Kabels 2 entspricht. Bei solchen Crimpkontakten ist es wichtig, dass die Ausrichtung der konfektionierten Kabelenden 3 geprüft und die Kabel, falls erforderlich ausgerichtet, d.h. in die richtige Rotationslage gebracht werden. Der Crimpkontakt kann wie hier gezeigt ist, zum Beispiel eine im Querschnitt rechteckige Aussenkontur aufweisen. Eine mit diesem Crimpkontakt korrespondierende Zelle des Steckergehäuses ist mit 44 bezeichnet. Selbstverständlich kann das Kabelende 3 auch mit Crimpkontakten mit anderen Formgebungen oder anderen Kontaktelementen versehen sein. Für das allenfalls notwendige Ausrichten weist die Bestückungsanordnung 1 ein Ausrichtmodul 10 zum rotationslagerichtigen Ausrichten des konfektionierten Kabelendes 3 mit Dreheinrichtung 32 zum Drehen des Kabels 2 um seine Kabellängsachse L wenigsten im Bereich des Kabelendes (die Drehbewegung ist durch den Doppelpfeil w angedeutet) und eine optischen Detektionseinrichtung 11 zum Ermitteln der Rotationslage des konfektionierten Kabelendes 3 auf. Mit einer Transfereinrichtung kann das Kabel bzw. dessen Kabelende gegebenenfalls zwischen den Bearbeitungsstationen transferiert werden. Einzelheiten zur konstruktiven Ausgestaltung einer solchen Dreheinrichtung 32 des Ausrichtmoduls sind aus der bereits erwähnten EP 1 304 773 A1 entnehmbar.

Die Bestückungsanordnung 1 umfasst weiter eine Bestückungsgreifeinheit mit einem Kabelgreifer 5, der zwei gegenläufig bewegbare Greiferbacken 6, 7 zum Erfassen und Greifen des Kabels 2 aufweist. Zum Bewegen der Greiferbacken 6, 7 ist ein (hier nicht dargestellter) pneumatischer Aktuator vorgesehen, der von einer mit 9 bezeichneten Steuereinrichtung ansteuerbar ist.

Die vorliegende optische Detektionseinrichtung 11 umfasst eine Kamera 14, bevorzugt eine Digitalkamera, in einer stirnseitigen Lage in der Bestückungsanordnung positioniert ist, so dass die Kamera 14 in axialer Richtung auf das stirnseitige Ende des Kabelendes 3 gerichtet ist.

Beim eigentlichen Bestücken, also dem Einsetzen bzw. Einführen des konfektionierten Kabelendes 3 in der Produktionsphase in eine entsprechende Zelle eine Steckergehäuses, führt der Kabelgreifer 5 das Kabelende 3 in die korrekte Steckposition (z.B. in der Zelle 44). Beispielsweise bei dünnen Kabeln 2 kann es notwendig sein, nach dem ersten teilweisen Einführen des Kabelendes 3 das Kabel 2 an einer hinteren Position neu gegriffen wird, um das Kabelende 3 vollständig einzuführen. Der hierfür notwendige Zwischenschritt ist als Nachgreifen bekannt und geläufig Die hier gezeigte und nachfolgend im Detail beschriebene Bestückungsanordnung 1 ist für ein solches Nachgreifen ausgelegt.

Für das Nachgreifen müssen die Greiferbacken 6, 7 in eine Zwischenstellung gebracht werden, in der die Greiferbacken 6 und 7 das Kabel 2 nicht mehr - wie in der Schliessstellung - klemmend festhalten, sondern derart erfassen, dass die Greiferbacken 6 und 7 in der Rückwärtsbewegung beim Nachgreifen am Kabel 2 entlang fahren können. Die Greiferbacken öffnen sich also bis zur Zwischenstellung und fahren zurück. Das Kabel 2 bleibt dabei durch die Greiferbacken 6, 7 geführt.

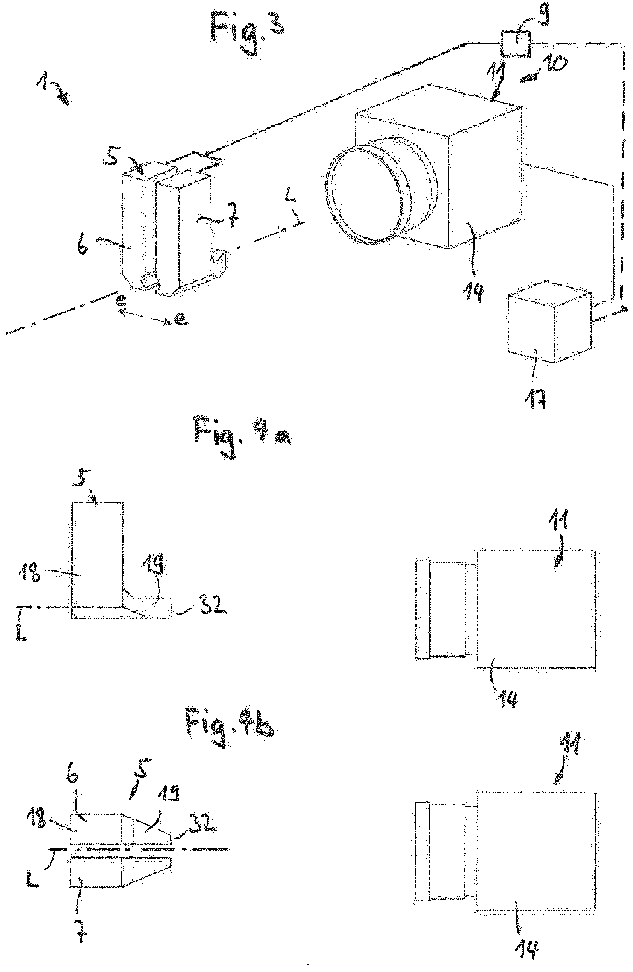

Figur 3 betrifft dieselbe Bestückungsanordnung 1, hier allerdings während einem Einrichtprozess für den Kabelgreifer 5 vor der Produktionsphase, in welchem das Kalibrieren der Kabelgreifers für die Zwischenstellung stattfindet. Zum Einstellen der optimalen Zwischenstellung für das Nachgreifen wird der Kabelgreifer 5 bzw. dessen Aktuator kalibriert. Bei der Kalibrierung wird der Aktuator zunächst mit einem vordefinierten ersten Druckluftpuls beaufschlagt, worauf der Greiferbacken teilweise geöffnet wird. Die jeweiligen Öffnungsrichtungen der Greiferbacken 6, 7 sind mit Pfeilen e dargestellt. Danach wird die so erreichte Zwischenstellung mit der Kamera 14 mit einer mit 17 bezeichneten Bildauswertungseinheit geprüft. Wenn mittels der Detektionseinrichtung 11 erkannt worden ist, dass nicht die gewünschte Zwischenstellung erreicht worden ist, wird der Kabelgreifer 5 wieder geschlossen und der Vorgang wiederholt, wobei nun zwei oder mehrere Druckluftstösse mit gleicher Zeitdauer des jeweiligen Druckluftstosses appliziert werden. Alternativ kann bei der Wiederholung des Vorgangs auch wieder nur ein Druckluftstoss appliziert werden, wobei die Zeitdauer des Druckluftstoss verändert wird. Die Länge des Druckluftpulses wird in diesem Fall variiert.

Die optischen Detektionseinrichtung 11 zum Ermitteln der Rotationslage des konfektionierten Kabelendes 3 ist derart ausgeführt, dass mit der Kamera 14 auch die Öffnungsbewegung der Greiferbacken 6, 7 zum Erstellen der Zwischenstellung für das Nachgreifen für die spätere Bestückung des Steckergehäuses überwachbar ist. Mit der optischen Detektionseinrichtung 11 sind demnach Bewegungs- und/oder Lagedaten der geöffneten Greiferbacken 6, 7 in der Zwischenstellung erfassbar. Die Steuereinheit 9 ist derart ausgeführt und mit dem Ausrichtmodul 10 mit der Detektionseinrichtung 11 verbunden, dass anhand von der Detektionseinrichtung 11 ermittelten Daten der vorgängig durchgeführten Öffnungsbewegung der Greiferbacken 6, 7 der Aktuator 8 im Hinblick auf den Nachgreifvorgang kalibriert werden kann.

Der Kabelgreifer 5 ist an einem (hier nicht dargestellten) Träger 45 angeordnet sein. Nach Beendigung des Kalibrierungsprozesses ist der Kabelgreifer 5 wenigstens im Hinblick auf das Nachgreifen fertig eingerichtet. Das Kabel 2 kann in der Produktionsphase zum Gehäuseaufnameeinrichtung 33, in dem das oder die Steckergehäuse aufgenommen ist bzw. sind, geführt und das Kabelende in das Steckergehäuse eingesetzt werden. Beim Einsetzen des Kabelendes 3 durch den Kabelgreifer 5 in das Steckergehäuse werden nach dem erstmaligen Vorschieben des Kabels 2, bei oder nach dem das Kabelende 3 noch nicht vollständig in das Steckergehäuse eingesetzt ist, ein oder mehrere Nachgreifen zum stufenweisen weiteren Vorschieben des Kabels 2 durchgeführt, wobei für das Nachgreifen die Zwischenstellung der Greiferbacken 6, 7 eingestellt wird, welche auf der bei der Kalibrierung ermittelten Stellgrösse für den wenigstens einen Druckluftpuls basiert. Die Kalibrierung wird an einem Produktionsanfang vorgenommen. Beispielsweise bei länger dauernden Produktionen kann es notwendig sein, dass die Kalibrierung in vordefinierten Abständen wiederholt wird.

Die Figuren 4a und 4b betreffen weitere Ansichten der Anordnung gemäss Figur 3.

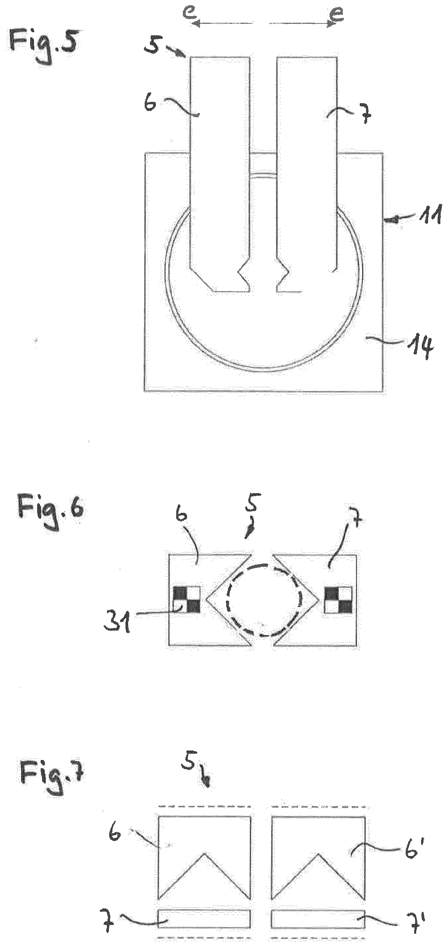

Wie anhand der Figuren 2, 3, 4a und 4b erkennbar ist, ist der Kabelgreifer 5 zweiteilig ausgestaltet, wobei jeder der beiden Teile 6, 7 jeweils aus einem Backengrundkörper 18 mit daran angeformter Backennase 19 besteht. Wie insbesondere aus Figur 5 erkennbar ist, weisen die beiden Greiferbacken 6, 7 nutartige Vertiefungen zur Aufnahme der Kabel auf. Anstelle der hier gezeigten nutartigen Vertiefungen, die im Querschnitt eine rautenförmige Innenkontur definieren, sind auch andere Formgebungen vorstellbar. Beispielsweise könnten die nutartigen Vertiefungen im Querschnitt einen Halbkreis formen.

Figur 6 zeigt eine Variante für den Kabelgreifer 5, bei dem an den Stirnseiten der Greiferbacken 6, 7 Markierungen 31 angebracht sind, mit deren Hilfe die Bildauswertung vereinfacht werden kann. Weiter ist aus dieser Figur erkennbar, dass in der Zwischenstellung ein kleiner Lüftspalt zwischen dem mit einer strichlierten Linie angedeuteten Kabel 2 und Greiferbacken 6, 7 vorliegt.

Die Bestückungsanordnung 1 kann auch einen als Doppelgreifer ausgestalteten Kabelgreifer 5 aufweisen. Ein Beispiel für einen derartigen Kabelgreifer 5 zeigt Figur 7. Der hier gezeigte Kabelgreifer 5 zeichnet sich weiterhin durch jeweils unterschiedlich gestaltete Greiferbacken 6, 7; 6', 7' aus. Mit gestrichelten Linien ist eine virtuelle Schieblehre zum Vermessen der Greiferbacken eines Bildauswertungsprogramms angedeutet. Die virtuelle Schieblehre wird an die Aussenkontur der Greiferbacken 6, 7; 6', 7' gelegt, woraus die Lagedaten der Greiferbacken entnehmbar sind. Sind die Aussenkonturen erkannt, so kann die erzielte Stellung des wenigstens einen Druckluftimpulses gemessen werden. Die Daten der Öffnungsbewegung der Greiferbacken 6, 7 können selbstverständlich auch mit anderen bekannten Bildmessungsverfahren ermittelt werden.

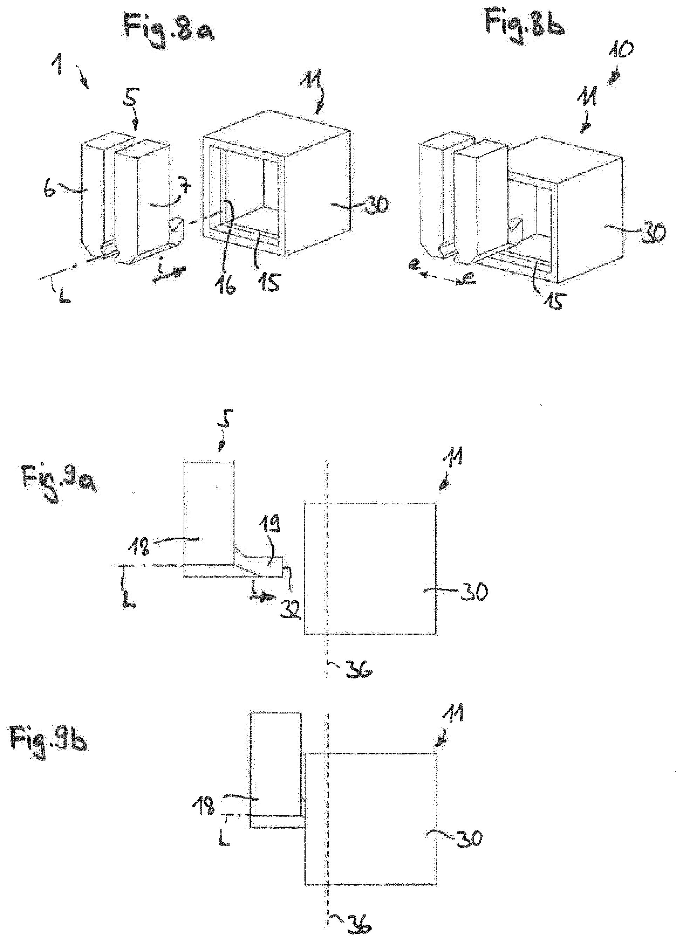

Die in den Figuren 8a, 8b und 9a, 9b gezeigte Bestückungsanordnung 1 weist eine optische Detektionseinrichtung 11 zum Ermitteln der Rotationslage des konfektionierten Kabelendes 3, welches ein als CCD-Modul bezeichnetes Bilderfassungsmodul 30 umfasst. Das CCD-Modul 30 verfügt über zwei in unterschiedlichen Richtungen angeordneten und zusammen auf einer Ebene liegenden CCD-Zeilensensoren 15, 16 sowie eine (hier nicht dargestellte) Bildauswerteeinrichtung zur Auswertung der vom CCD-Modul generierten Bilddaten und vorzugsweise eine Beleuchtungseinrichtung. Der Zeilensensor 15 ist ein horizontal verlaufender Zeilensensor und der andere bzw. zweite Zeilensensor 16 verläuft in einer vertikalen Richtung. Der Kabelgreifer 5 wird für die Kalibrierung über die Backennasen 19 in das CCD-Modul 30 eingebracht (siehe Figur 8b und Figur 9b). Anstelle des hier gezeigten CCD-Moduls 30 könnte auch eine anderes Bilderfassungsmodul mit wenigstens zwei in unterschiedlichen Richtungen angeordneten Zeilensensoren verwendet werden. Als Zeilensensoren 15, 16 kommen insbesondere auch CMOS- Zeilensensoren in Frage.

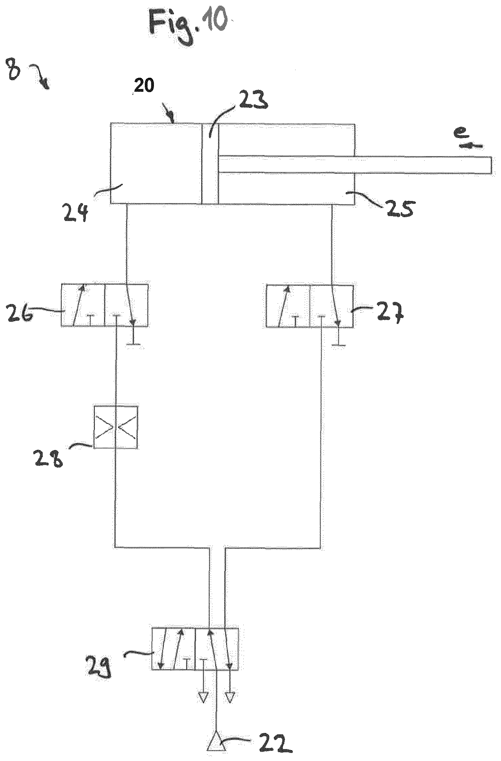

Der pneumatische Aktuator 8 zum Betätigen bzw. Aktivieren des Kabelgreifers 5 der Bestückungsanordnung 1 weist eine Ventilanordnung mit wenigstens einem von der Steuereinheit 9 ansteuerbares Steuerventil auf, mit dem der Aktuator 8 wenigstens für die Öffnungsbewegung zum Erstellen der Zwischenstellung mit wenigstens einem Druckluftpulsen beaufschlagbar ist. Eine erste Variante für diesen Aktor betrifft Figur 10. Figur 10 zeigt ein Pneumatikschema für den Aktuator. Der Aktuator 8 umfasst einen als doppeltwirkend ausgestalteten Pneumatikzylinder 20. Der Pneumatikzylinder 20 weist einen Kolben 23 als Stellelement auf. Die Bewegung des Kolbens zum Öffnen des Kabelgreifers ist mit dem Pfeil e angedeutet. Mit 22 ist eine Druckluftquelle bezeichnet. Die Druckluft kann beispielsweise durch eine eigene Druckluftquelle oder eine Druckluftspeiseleitung bereitgestellt werden. Die Ventilanordnung des Aktuators weist zwei als Schnellschaltventile ausgestaltetes Steuerventile 26, 27 auf, wobei jeder Druckkammer 24, 25 ein Steuerventil zugeordnet ist. Dem sich bei der Öffnungsbewegung verkleinernden Druckkammer 24 zugeordneten Steuerventil 26 ist ein Blendenventil 28 vorgeschaltet. Das Blendenventil 28 verlangsamt den Druckabbau in der Druckkammer 24, was die Reaktion des Pneumatikzylinders 20 träge macht und die Ansteuerung über die Steuereinheit 9 vereinfacht. Zudem wird das Pneumatiksystem durch den höheren Kammerdruck unempfindlicher gegenüber äusseren Kräften oder Einflüssen. Die Ventilanordnung 29 weist weiter ein 5/2 Wegeventil auf, das an die Druckluftquelle 22 folgt.

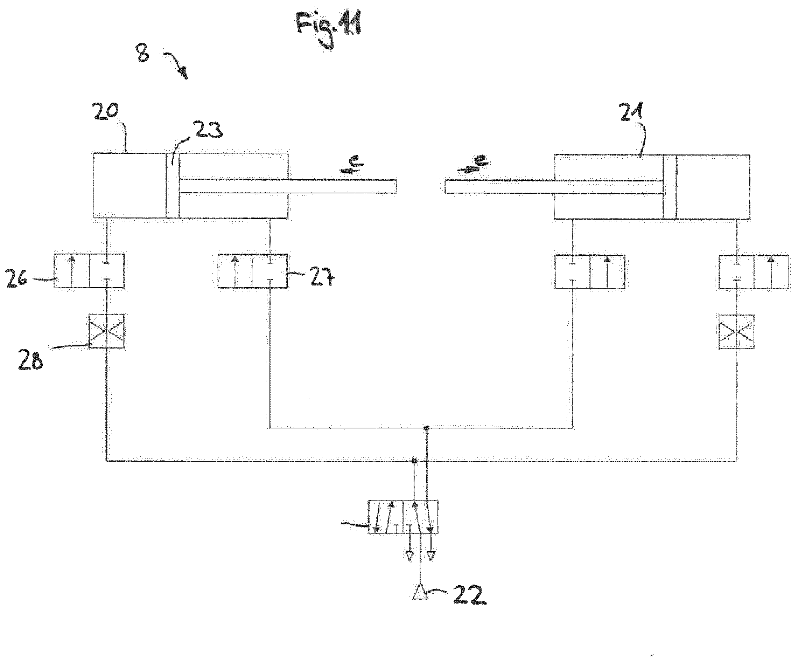

Figur 11 zeigt ein Pneumatikschema für einen Aktuator 8 mit zwei Pneumatikzylindern 20 und 21 und einer Ventilanordnung zum simultanen Bewegen der Greiferbacken . Die Ventilanordnung in Bezug auf jeweils einen der Pneumatikzylinder 20, 21 entspricht dabei in etwa derjenigen aus Figur 10.

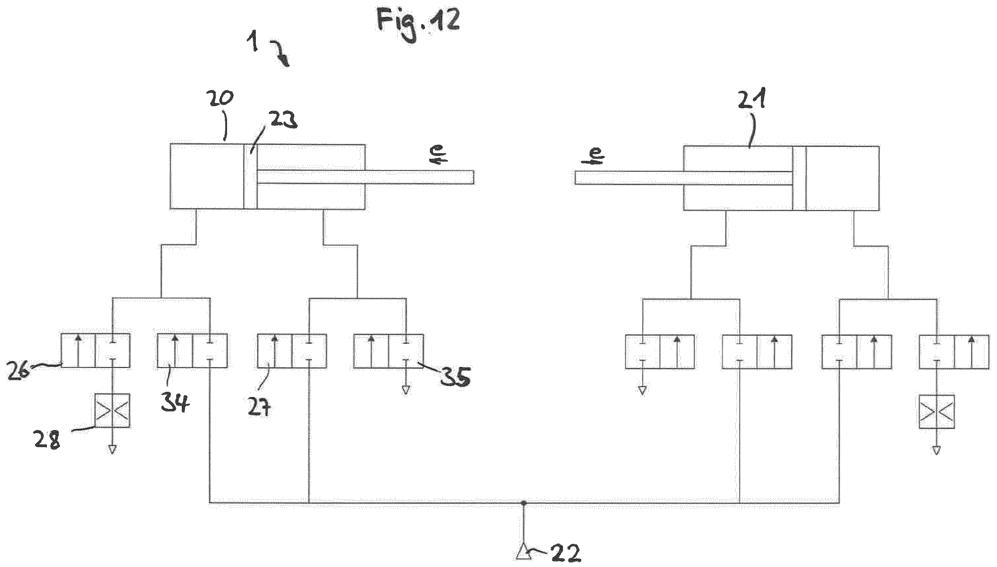

Figur 12 betrifft eine Variante eines Aktuator 8 mit zwei Pneumatikzylindern 20 und 21. Die Ventilanordnung verfügt insgesamt über acht Schnellschaltventile, vier Schnellschaltventile je Pneumatikzylinder. Ein 5/2 Wegeventil ist im Gegensatz zur in Figur 11 gezeigten Ausführung nicht erforderlich. Für den mit 20 bezeichneten Pneumatikzylinder sind die vier Schnellschaltventile die Ventile 26, 34; 27; 35 zugeordnet. Diese Variante hat den Vorteil, dass ein schnelles Schliessen der Kabelgreifer erreicht werden kann. Die Ventilanordnung führt dazu, dass sich ein schnelles Erreichen des Enddrucks im schliessenden Pneumatikzylinder ergibt, was für ein wiederholgenaues Öffnen der Greiferbacken besonders vorteilhaft ist. Die in Figur 12 gezeigte Pneumatikschaltung funktioniert wiederholgenau und schnell, und auch mit längeren Pneumatikschläuchen (wenigstens bis ca. 1m Länge). Dadurch ist es möglich, die Schnellschaltventile unbewegt zu montieren und so die Masse des Bestückungsgreifers klein zu halten. Zudem zeichnet sich dieser Variante durch einen vergleichsweise geringen Druckluftverbrauch aus.

## Patentansprüche

1. Bestückungsanordnung (1) zur Bestückung von Steckergehäusen (41) mit konfektionierten Kabelenden (3) von Kabeln (2), die Bestückungsanordnung (1) umfassend:
- einen Kabelgreifer (5), der zwei Greiferbacken (6, 7) zum Erfassen und Greifen des Kabels (2) und einen derart mit Druckmitteln betreibbaren Aktuator (8) zum Betätigen des Kabelgreifers (5) aufweist, dass zum Einsetzen des konfektionierten Kabelendes (3) in das Steckergehäuse das Kabel (2) durch die Greiferbacken (6, 7) in einer Schliessstellung klemmend festhaltbar ist und dass zum Nachgreifen die Greiferbacken (6, 7) durch eine Öffnungsbewegung von der Schliessstellung in eine Zwischenstellung überführbar sind,
- einem Greiferortungssystem, das dazu eingerichtet ist, die Lage der Greiferbacken (6, 7) zu ermitteln, wobei das Greiferortungssystem derart mit dem Kabelgreifer (5) in Wirkverbindung steht, dass mittels des Greiferortungssystems der Kabelgreifer (5) für die Zwischenstellung kalibrierbar ist,
- ein Ausrichtmodul (10) zum rotationslagerichtigen Ausrichten des konfektionierten Kabelendes (3) mit einer optischen Detektionseinrichtung (11) zum Ermitteln der Rotationslage des konfektionierten Kabelendes (3) umfasst, wobei die Detektionseinrichtung (11) zum Bilden des Greiferortungssystems derart ausgeführt ist, dass mit der Detektionseinrichtung (11) die Öffnungsbewegung der Greiferbacken (6, 7) überwachbar ist, und wobei die Bestückungsanordnung (1) eine Steuereinheit (9) zum Ansteuern des Aktuators (8) umfasst, die derart mit dem Ausrichtmodul (10) verbunden ist, dass anhand von der Detektionseinrichtung (11) ermittelten Daten der Öffnungsbewegung der Greiferbacken (6, 7) der Aktuator (8) des Kabelgreifers (5) für die Zwischenstellung kalibriert werden kann.

2. Bestückungsanordnung (1) nach Anspruch 1, **dadurch gekennzeichnet, dass** der Aktuator (8) einen Pneumatikzylinder (20) umfasst, wobei der Aktuator (8) mit dem Pneumatikzylinder (20) auf einem Träger (45) montiert ist.

3. Bestückungsanordnung (1) nach Anspruch 1oder 2, **dadurch gekennzeichnet, dass** der Aktuator (8) wenigstens ein Steuerventil (26, 27) aufweist, mit dem der Aktuator (8) wenigstens für die Öffnungsbewegung mit wenigstens einem Druckluftpuls beaufschlagbar ist.

4. Bestückungsanordnung (1) nach einem der Ansprüche 1 bis 3, **dadurch gekennzeichnet, dass** der Aktuator (8) einen Pneumatikzylinder (20) umfasst und dass der Aktuator (8) ein als Schnellschaltventil ausgestaltetes Steuerventil (26, 27) je Druckkammer (24, 25) aufweist, wobei vorzugsweise wenigstens einem der Steuerventile (26, 27) und bevorzugt dem sich bei der Öffnungsbewegung verkleinernden Druckkammer (24) zugeordneten Steuerventil (26) ein Blendenventil (28) vor- oder nachgeschaltet ist.

5. Bestückungsanordnung (1) nach einem der Ansprüche 1 bis 4, **dadurch gekennzeichnet, dass** der Aktuator zwei als Schnellschaltventile ausgestaltete Steuerventile (26, 34; 27, 35) je Druckkammer (24, 25) aufweist.

6. Bestückungsanordnung (1) nach einem der Ansprüche 1 bis 5, **dadurch gekennzeichnet, dass** das Greiferortungssystem und insbesondere die Detektionseinrichtung (11) eine Kamera (14) oder ein Bilderfassungsmodul (30) mit wenigstens zwei in unterschiedlichen Richtungen angeordneten Zeilensensoren (15, 16) aufweist.

7. Bestückungsanordnung (1) nach Anspruch 6, **dadurch gekennzeichnet, dass** die Kamera (14) bezüglich einer durch den Kabelgreifer vorgegebenen Längsachse (L) in einer stirnseitigen Lage positioniert ist oder dass die wenigstens zwei Zeilensensoren (15, 16) des Bilderfassungsmoduls (30) auf einer bevorzugt senkrecht zur Längsachse (L) verlaufenden Ebene liegen.

8. Bestückungsanordnung (1) nach Anspruch 7, **dadurch gekennzeichnet, dass** die Greiferbacken (6, 7) jeweils Backennasen (19) aufweisen und dass der Kabelgreifer (5) über die Backennasen (19) in das Bilderfassungsmodul (30) einbringbar ist.

9. Verfahren zur Bestückung von Steckergehäusen (41) mit konfektionierten Kabelenden (3) eines Kabels (2) unter Verwendung der Bestückungsanordnung (1) nach einem der Ansprüche 1 bis 8, wobei während einer Produktionsphase das Kabelende (3) durch einen Kabelgreifer (5) in ein Steckergehäuse (41) eingesetzt wird, dass nach einem erstmaligen Vorschieben des Kabels (2), bei oder nach dem das Kabelende (3) noch nicht vollständig in das Steckergehäuse eingesetzt ist, ein oder mehrere Nachgreifen zum stufenweisen weiteren Vorschieben des Kabels erfolgen, wobei zum Nachgreifen die Greiferbacken (6, 7) bis zu einer Zwischenstellung geöffnet werden, und wobei vor der Produktionsphase zum Einrichten des Kabelgreifers (5) im Hinblick auf das Nachgreifen in der Produktionsphase folgenden Schritte durchgeführt werden:
- Zuführen des Kabelgreifers (5) zu einem Greiferortungssystem und zu einem Ausrichtmodul (10) mit einer optischen Detektionseinrichtung (11), mit der die rotationslagerichtige Ausrichtung des Kabelendes (3) überprüfbar ist,
- Kalibrieren des Kabelgreifers (5) für die Zwischenstellung, indem die Greiferbacken (6, 7) des Kabelgreifers (5) testweise mittels wenigstens eines Druckluftpulses von einer Schliessstellung in Öffnungsrichtung zum Erstellen der Zwischenstellung bewegt werden, wobei die Bewegungs- und/oder Lagedaten der so geöffneten Greiferbacken (6, 7) mit dem Greiferortungssystem und mit der optischen Detektionseinrichtung (11) des Ausrichtmoduls (10) ermittelt werden.

10. Verfahren nach Anspruch 9, **dadurch gekennzeichnet, dass** bei der Kalibrierung die Greiferbacken (6, 7) mit einem Druckluftpuls in Zwischenstellungen bewegt werden, wobei die Länge des jeweiligen Druckluftpulses variiert wird.

11. Verfahren nach Anspruch 9 oder 10, **dadurch gekennzeichnet, dass** bei der Kalibrierung die Greiferbacken (6, 7) mit mehreren Abfolgen von Druckluftpulsen in Zwischenstellungen bewegt werden, wobei die Länge und/oder Anzahl der Druckluftpulse in den Abfolgen variiert werden.

12. Verfahren nach einem der Ansprüche 9 bis 11, **dadurch gekennzeichnet, dass**, wenn das Greiferortungssystem und insbesondere die Detektionseinrichtung (10) eine Kamera (14) ist oder umfasst, die Greiferbacken (6, 7) in einen Fokusbereich der Kamera (14) gebracht wird oder die Kamera- oder Objektiveinstellung der Kamera (14) derart angepasst wird, dass für die Kalibrierung die Kamera (14) auf Greiferbacken (6, 7) fokussiert, oder dass, wenn das Greiferortungssystem und insbesondere die Detektionseinrichtung (10) ein Bilderfassungsmodul (30) mit wenigstens zwei in unterschiedlichen Richtungen angeordneten Zeilensensoren (15, 16) ist oder umfasst, der Kabelgreifer (5) während des Kalibrierungsvorgangs wenigstens teilweise in das Bilderfassungsmodul (30) eingebracht wird.

13. Verfahren nach Anspruch 12, **dadurch gekennzeichnet, dass** nach einer erstmaligen Kalibrierung des Kabelgreifers (5) am Produktionsanfang die Kalibrierung in vordefinierten Abständen wiederholt wird.

## Claims

1. Equipping arrangement (1) for equipping connector housings (41) with fitted-out cable ends (3) of cables (2), the equipping arrangement (1) comprising:
- a cable gripper (5) that has two gripper jaws (6, 7) for grasping and gripping the cable (2) and an actuator (8) for actuating the cable gripper (5) that can be operated with pressure means in such a way that the cable (2) can be clamped in a closed position by the gripper jaws (6, 7) for inserting the fitted-out cable end (3) into the connector housing and that the gripper jaws (6, 7) can be moved from the closed position to an intermediate position by an opening movement for subsequent gripping,
- a gripper location system that is designed to determine the position of the gripper jaws (6, 7), wherein the gripper location system is operatively connected to the cable gripper (5) in such a way that the cable gripper (5) can be calibrated for the intermediate position by means of the gripper location system,
- an alignment module (10) for the rotationally correct alignment of the fitted-out cable end (3), with an optical detection device (11) for determining the rotational position of the fitted-out cable end (3),
wherein the detection device (11) for forming the gripper location system is designed such that the opening movement of the gripper jaws (6, 7) can be monitored with the detection device (11), and wherein the equipping arrangement (1) comprises a control unit (9) for controlling the actuator (8), which is connected to the alignment module (10) in such a way that the actuator (8) of the cable gripper (5) can be calibrated for the intermediate position based on data of the opening movement of the gripper jaws (6, 7) determined by the detection device (11).

2. Equipping arrangement (1) according to either claim 1, **characterized in that** the actuator (8) comprises a pneumatic cylinder (20), wherein the actuator (8) has the pneumatic cylinder (20) being mounted on a carrier (45).

3. Equipping arrangement (1) according to claim 1 or 2, **characterized in that** the actuator (8) has at least one control valve (26, 27) with which the actuator (8) can be acted upon at least for the opening motion with at least one compressed air pulse.

4. Equipping arrangement (1) according to any of claims 1 to 3, **characterized in that** the actuator (8) comprises a pneumatic cylinder (20) and **in that** the actuator (8) has a control valve (26, 27) designed as a quick-acting valve for each pressure chamber (24, 25), wherein an orifice valve (28) is preferably connected upstream or downstream of at least one of the control valves (26, 27) and preferably the control valve (26) associated with the pressure chamber (24) that decreases in size during the opening movement.

5. Equipping arrangement (1) according to any of claims 1 to 4, **characterized in that** the actuator has two control valves (26, 34; 27, 35) configured as quick-acting valves for each pressure chamber (24, 25).

6. Equipping arrangement (1) according to any of claims 1 to 5, **characterized in that** the gripper location system and in particular the detection device (11) has a camera (14) or an image acquisition module (30) with at least two line sensors (15, 16) arranged in different directions.

7. Equipping arrangement (1) according to claim 6, **characterized in that** the camera (14) is positioned in a frontal position with respect to a longitudinal axis (L) predetermined by the cable gripper, or **in that** the at least two line sensors (15, 16) of the image acquisition module (30) lie on a plane preferably perpendicular to the longitudinal axis (L).

8. Equipping arrangement (1) according to claim 7, **characterized in that** the gripper jaws (6, 7) each have jaw lugs (19), and **in that** the cable gripper (5) can be introduced into the image acquisition module (30) via the jaw lugs (19).

9. Method for equipping connector housings (41) with fitted-out cable ends (3) of a cable (2) using the equipping arrangement (1) according to any of claims 1 to 8, wherein during a production phase the cable end (3) is inserted into a connector housing (41) by a cable gripper (5), that after the cable (2) is advanced for the first time, during or after which the cable end (3) is not yet fully inserted into the connector housing, one or more subsequent gripping operations are carried out to gradually advance the cable further, wherein the gripper jaws (6, 7) are opened to an intermediate position for subsequent gripping, and wherein before the production phase for setting up the cable gripper (5) with a view to subsequent gripping in the production phase the following steps are carried out:
- feeding the cable gripper (5) to a gripper location system and to an alignment module (10) with an optical detection device (11) with which the rotationally correct alignment of the cable end (3) can be checked,
- calibrating the cable gripper (5) for the intermediate position by moving the gripper jaws (6, 7) of the cable gripper (5) for test purposes by means of at least one compressed air pulse from a closed position in the opening direction to create the intermediate position, wherein the motion and/or position data of the gripper jaws (6, 7) thus opened are determined with the gripper location system and with the optical detection device (11) of the alignment module (10).

10. Method according to claim 9, **characterized in that,** during the calibration, the gripper jaws (6, 7) are moved with a compressed air pulse into intermediate positions, wherein the length of the corresponding compressed air pulse varies.

11. Method according to either claim 9 or claim 10, **characterized in that,** during the calibration, the gripper jaws (6, 7) are moved with several sequences of compressed air pulses into intermediate positions, wherein the length and/or number of compressed air pulses is/are varied in the sequences.

12. Method according to any of claims 9 to 11, **characterized in that,** if the gripper location system and, in particular, the detection device (10) is or comprises a camera (14), the gripper jaws (6, 7) are brought into a focal range of the camera (14) or the camera or lens setting of the camera (14) is adjusted such that the camera (14) focuses on gripper jaws (6, 7) for calibration, or **in that**, if the gripper location system and, in particular, the detection device (10) is or comprises an image acquisition module (30) with at least two line sensors (15, 16) arranged in different directions, the cable gripper (5) is at least partially introduced into the image acquisition module (30) during the calibration process.

13. Method according to claim 12, **characterized in that,** after the cable gripper (5) has been calibrated for the first time at the start of production, the calibration is repeated at predefined intervals.

## Revendications

1. Agencement d'équipement (1) permettant d'équiper des boîtiers de connecteurs (41) d'extrémités de câbles (3) confectionnées de câbles (2), l'agencement d'équipement (1) comprenant :
- un moyen de préhension de câble (5) qui présente deux mâchoires de moyen de préhension (6, 7) permettant d'agripper et de saisir le câble (2) et un actionneur (8) pouvant être actionné par des moyens de pression et permettant d'actionner le moyen de préhension de câble (5) de telle sorte que, pour l'insertion de l'extrémité de câble (3) confectionnée dans le boîtier de connecteur, le câble (2) peut être maintenu par serrage dans une position de fermeture par les mâchoires de moyen de préhension (6, 7) et que, pour la saisie à nouveau, les mâchoires de moyen de préhension (6, 7) peuvent être transférées par un mouvement d'ouverture de la position de fermeture dans une position intermédiaire,
- un système de localisation de moyen de préhension qui est configuré pour déterminer la position des mâchoires de moyen de préhension (6, 7), dans lequel le système de localisation de moyen de préhension est en liaison active avec le moyen de préhension de câble (5) de telle sorte que le moyen de préhension de câble (5) peut être calibré pour la position intermédiaire au moyen du système de localisation de moyen de préhension,
- un module d'alignement (10) pour l'alignement correct en position de rotation de l'extrémité de câble (3) confectionnée comportant un dispositif de détection optique (11) permettant de déterminer la position de rotation de l'extrémité de câble (3) confectionnée, dans lequel le dispositif de détection (11) est configuré pour former le système de localisation de moyen de préhension de telle sorte que le mouvement d'ouverture des mâchoires de moyen de préhension (6, 7) peut être surveillé au moyen du dispositif de détection (11), et dans lequel l'agencement d'équipement (1) comprend une unité de commande (9) permettant de commander l'actionneur (8), laquelle est connectée au module d'alignement (10) de telle sorte que, à l'aide de données du mouvement d'ouverture des mâchoires de moyen de préhension (6, 7) déterminées par le dispositif de détection (11), l'actionneur (8) du moyen de préhension de câble (5) peut être calibré pour la position intermédiaire.

2. Agencement d'équipement (1) selon la revendication 1, **caractérisé en ce que** l'actionneur (8) comprend un vérin pneumatique (20), dans lequel l'actionneur (8) est monté avec le vérin pneumatique (20) sur un support (45).

3. Agencement d'équipement (1) selon la revendication 1 ou 2, **caractérisé en ce que** l'actionneur (8) présente au moins une soupape de commande (26, 27), avec laquelle l'actionneur (8) peut être sollicité par au moins une impulsion d'air comprimé au moins pour le mouvement d'ouverture.

4. Agencement d'équipement (1) selon l'une des revendications 1 à 3,
**caractérisé en ce que** l'actionneur (8) comprend un vérin pneumatique (20) **et en ce que** l'actionneur (8) présente une soupape de commande (26, 27) conçue comme une soupape de commutation rapide par chambre de pression (24, 25), dans lequel, de préférence, une soupape à diaphragme (28) est montée en amont ou en aval d'au moins l'une des soupapes de commande (26, 27) et préférablement de la soupape de commande (26) associée à la chambre de pression (24) qui se réduit lors du mouvement d'ouverture.

5. Agencement d'équipement (1) selon l'une des revendications 1 à 4,
**caractérisé en ce que** l'actionneur présente deux soupapes de commande (26, 34 ; 27, 35) conçues comme des soupapes de commutation rapide par chambre de pression (24, 25).

6. Agencement d'équipement (1) selon l'une des revendications 1 à 5,
**caractérisé en ce que** le système de localisation de moyen de préhension et en particulier le dispositif de détection (11) présente une caméra (14) ou un module de capture d'images (30) comportant au moins deux capteurs linéaires (15, 16) disposés dans des directions différentes.

7. Agencement d'équipement (1) selon la revendication 6, **caractérisé en ce que** la caméra (14) est positionnée dans une position frontale par rapport à un axe longitudinal (L) prédéfini par le moyen de préhension de câble **ou en ce que** les au moins deux capteurs linéaires (15, 16) du module de capture d'images (30) se trouvent sur un plan s'étendant de préférence perpendiculairement à l'axe longitudinal (L).

8. Agencement d'équipement (1) selon la revendication 7, **caractérisé en ce que** les mâchoires de moyen de préhension (6, 7) présentent respectivement des ergots de mâchoire (19) **et en ce que** le moyen de préhension de câble (5) peut être introduit dans le module de capture d'images (30) par l'intermédiaire des ergots de mâchoire (19).

9. Procédé permettant d'équiper des boîtiers de connecteurs (41) d'extrémités de câble (3) confectionnées d'un câble (2) à l'aide de l'agencement d'équipement (1) selon l'une des revendications 1 à 8, dans lequel, pendant une phase de production, l'extrémité de câble (3) est insérée dans un boîtier de connecteur (41) par un moyen de préhension de câble (5), en ce que, après une première avance du câble (2), lors de laquelle ou après laquelle l'extrémité de câble (3) n'est pas encore complètement insérée dans le boîtier de connecteur, une ou plusieurs nouvelles saisies sont effectuées pour continuer à faire avancer le câble progressivement, dans lequel, pour la saisie à nouveau, les mâchoires de moyen de préhension (6, 7) sont ouvertes jusqu'à une position intermédiaire, et dans lequel, avant la phase de production, pour l'installation du moyen de préhension de câble (5) en vue de la saisie à nouveau dans la phase de production, les étapes suivantes sont réalisées :
- amenée du moyen de préhension de câble (5) à un système de localisation de moyen de préhension et à un module d'alignement (10) comportant un dispositif de détection optique (11) avec lequel l'alignement correct en position de rotation de l'extrémité de câble (3) peut être vérifié,
- calibrage du moyen de préhension de câble (5) pour la position intermédiaire en déplaçant les mâchoires de moyen de préhension (6, 7) du moyen de préhension de câble (5) à titre de test au moyen d'au moins une impulsion d'air comprimé depuis une position de fermeture dans le sens d'ouverture pour établir la position intermédiaire, dans lequel les données de mouvement et/ou de position des mâchoires de moyen de préhension (6, 7) ainsi ouvertes sont déterminées au moyen du système de localisation de moyen de préhension et au moyen du dispositif de détection optique (11) du module d'alignement (10).

10. Procédé selon la revendication 9, **caractérisé en ce que,** lors du calibrage, les mâchoires de moyen de préhension (6, 7) sont déplacées dans des positions intermédiaires au moyen d'une impulsion d'air comprimé, dans lequel la longueur de l'impulsion d'air comprimé respective est modifiée.

11. Procédé selon la revendication 9 ou 10, **caractérisé en ce que,** lors du calibrage, les mâchoires de moyen de préhension (6, 7) sont déplacées dans des positions intermédiaires au moyen de plusieurs séquences d'impulsions d'air comprimé, dans lequel la longueur et/ou le nombre d'impulsions d'air comprimé sont modifiés dans les séquences.

12. Procédé selon l'une des revendications 9 à 11, **caractérisé en ce que,** lorsque le système de localisation de moyen de préhension et en particulier le dispositif de détection (10) est ou comprend une caméra (14), les mâchoires de moyen de préhension (6, 7) sont amenées dans une zone de focalisation de la caméra (14) ou le réglage de la caméra ou de l'objectif de la caméra (14) est adapté de telle sorte que, pour le calibrage, la caméra (14) se trouve sur des mâchoires de moyen de préhension (6, 7), **ou en ce que,** lorsque le système de localisation de moyen de préhension et en particulier le dispositif de détection (10) est ou comprend un module de capture d'images (30) comportant au moins deux capteurs linéaires (15, 16) disposés dans des directions différentes, le moyen de préhension de câble (5) est introduit au moins partiellement dans le module de capture d'images (30) pendant le processus de calibrage.

13. Procédé selon la revendication 12, **caractérisé en ce que,** après un premier calibrage du moyen de préhension de câble (5) au début de la production, le calibrage est répété à des intervalles prédéfinis.
